# EUROPÄISCHE PATENTANMELDUNG

(11) **EP 1 990 782 A2**
(43) Veröffentlichungstag der Anmeldung: **12.11.2008**
(21) Anmeldenummer: 08003259.2
(22) Anmeldetag: 22.02.2008
(51) Int. Cl.: G07F 7/10

(54) **Verfahren zum Speichern von Anwendungsdaten in einen Datenträger mit einem verschlüsselnden Speicher-Controller**

(30) Priorität: 07.05.2007 DE 102007021256
(71) Anmelder: Giesecke & Devrient GmbH, 81677 München (DE)
(72) Erfinder: Weiss, Dieter, 81825 München (DE); Moll, Jürgen, 82054 Sauerlach (DE)

(57) **Zusammenfassung**

Die Erfindung schafft ein Verfahren zum Speichern von Anwendungsdaten in einen Datenträger mit einem nichtflüchtigen Speicher und einem verschlüsselnden Speicher-Controller zum Ansteuern des nichtflüchtigen Speichers. Anwendungsdaten werden in einer Programmiermaschine verschlüsselt und unter Umgehung der Verschlüsselungs-Funktionalität des Speicher-Controllers in den nichtflüchtigen Speicher abgespeichert. Der erfindungsgemäße Datenträger hat für seinen nichtflüchtigen Speicher einen Speicher-Controller mit einer deaktivierbaren Verschlüsselungs-Funktionalität.

## Beschreibung

Die Erfindung betrifft ein Verfahren zum Speichern von Anwendungsdaten in einen Datenträger mit einem nichtflüchtigen Speicher und einem verschlüsselnden Speicher-Controller zum Ansteuern des nichtflüchtigen Speichers.

Ein Datenträger im Sinn der Erfindung ist ein Rechnersystem, bei dem die Ressourcen, d.h. Speicherressourcen und/oder Rechenkapazität (Rechenleistung) begrenzt sind, z.B. eine Chipkarte (Smart Card, Mikroprozessor-Chipkarte). Der Datenträger hat einen Körper, in dem eine CPU (ein Mikroprozessor) angeordnet ist, und der jede beliebige standardisierte oder nicht standardisierte Gestalt haben kann, beispielsweise die Gestalt einer flachen Chipkarte ohne Norm oder nach einer Norm wie z.B. ISO 7810 (z.B. ID-1, ID-00, ID-000) oder die eines volumigen Tokens. Der Datenträger kann weiter eine oder mehrere beliebige Schnittstellen für kontaktlose und/ oder kontaktbehaftete Kommunikation mit einem Lesegerät oder Datenverarbeitungssystem (z.B. Personal Computer, Workstation, Server) haben.

Der Datenträger hat in der Regel ein oder mehrere Speicher, insbesondere Festwertspeicher wie ROM, flüchtige Speicher wie RAM, nichtflüchtige Speicher wie EEPROM oder/und Flash-Speicher. Im Festwertspeicher ist in der Regel das Betriebssystem implementiert, in dem oder den nichtflüchtigen Speichern sind in der Regel im Wesentlichen Anwendungen implementiert. Die Speicher werden über ihnen jeweils zugeordnete Speicher-Controller angesteuert. Häufig ist ein einziger zentraler Controller vorgesehen, der zugleich als Speicher-Controller für alle Speicher arbeitet. Bei einer Chipkarte ist als zentraler Controller beispielsweise häufig der Chipkarten-Controller (Smartcard-Controller) vorgesehen.

Bei der Herstellung eines Datenträgers erhält in der Regel der Datenträger-Hersteller vom Chiphersteller einen zum Einbau in den Datenträger vorgesehenen Chip mit einem im Festwertspeicher ROM des Datenträgers vorinställiertem Betriebssystem. Die Anwendungen werden durch den Datenträger-Hersteller in den nichtflüchtigen Speicher implementiert. Der nichtflüchtige Speicher ist bei der Lieferung durch den Chiphersteller an den Datenträger-Hersteller in der Regel leer. Der Datenträger-Hersteller nimmt jedoch am nichtflüchtigen Speicher in der Regel Programmiervorgänge zu Testzwecken vor, bevor die Anwendungen implementiert werden, so dass der nichtflüchtige Speicher vor dem Implementieren der Anwendungen regelmäßig nicht leer ist.

Das Implementieren von Anwendungen in den Datenträger lässt sich in zwei Abschnitte gliedern, nämlich Initialisierung und nachfolgende Personalisierung. Bei der Initialisierung werden Anwendungsdaten in den Datenträger programmiert, die für eine Vielzahl von Datenträgern identisch sind. Bei der Personalisierung werden Anwendungsdaten in den Datenträger programmiert, die für einen einzelnen Datenträger oder für einige wenige Datenträger spezifisch sind. Die Initialisierung des Datenträgers wird regelmäßig durch den Datenträger-Hersteller durchgeführt. Die Personalisierung des Datenträgers wird wahlweise durch den Datenträger-Hersteller oder durch einen vom Datenträger-Hersteller unterschiedlichen Herausgeber (z.B. Bank, Mobilfunkbetreiber etc.) durchgeführt.

Anders als der Festwertspeicher ROM sind die nichtflüchtigen Speicher wie EEPROM und Flash-Speicher umprogrammierbar. Damit die Daten im nichtflüchtigen Speicher dennoch vor Manipulationen durch Unbefugte geschützt sind, werden zum Ansteuern der nichtflüchtigen Speicher von Datenträgern zunehmend verschlüsselnde Speicher-Controller verwendet, die eine Verschlüsselungs-Funktionalität haben. Ein verschlüsselnder Speicher-Controller empfängt im nichtflüchtigen Speicher zu speichernde Daten, verschlüsselt mit der Verschlüsselungs-Funktionalität die empfangenen Daten und speichert die verschlüsselten Daten in verschlüsselter Form im nichtflüchtigen Speicher ab. Hierdurch werden in den Datenträger geladene Daten für den nichtflüchtigen Speicher automatisch in verschlüsselter Form im nichtflüchtigen Speicher abgespeichert.

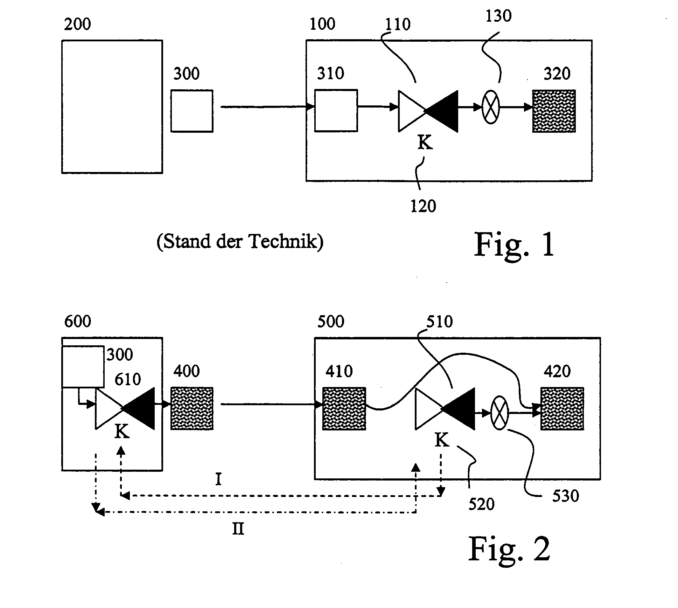

Physikalisch gesehen haben Daten, die durch die Verschlüsselungs-Funktionalität verschlüsselt werden, im nichtflüchtigen Speicher einen annähernd zufälligen Wert. Hierdurch hat der nichtflüchtige Speicher mit verschlüsselndem Speicher-Controller auf physikalischer Ebene ein von Speicherzelle zu Speicherzelle variierendes Muster von Speicherzuständen, das vor einem erneuten Speichern von Daten in den nichtflüchtigen Speicher beseitigt werden muss. Selbst wenn der nichtflüchtige Speicher mit verschlüsselndem Speicher-Controller logisch gelöscht wird, indem er in allen Speicherzellen auf einen Grundzustand, beispielsweise "00" oder "FF", programmiert wird, wird - auf Grund der Verschlüsselung - ein physikalischer Zustand des nichtflüchtigen Speichers erzeugt, bei dem die physikalischen Speicherzellen ein variierendes Muster von Speicherzuständen haben, bei dem also der Speicher physikalisch gesehen nicht gelöscht ist. Zudem ist auf Grund der Verschlüsselungs-Funktionalität vor jedem Programmiervorgang unbekannt, ob der nichtflüchtige Speicher physikalisch gelöscht ist oder nicht. Aus diesem Grund muss bei jedem nichtflüchtigen Speicher mit einem verschlüsselnden Speicher-Controller unmittelbar vor jedem Speichern von Daten in den nichtflüchtigen Speicher ein zeitraubender physikalischer Löschvorgang durchgeführt werden, bei dem der nichtflüchtige Speicher auf einen physikalisch gelöschten Zustand gesetzt wird. Das Speichern von Daten in einen nichtflüchtigen Speicher mit einem verschlüsselnden Speicher-Controller ist schematisch in Fig. 1 dargestellt.

Der Erfindung liegt die Aufgabe zu Grunde, ein zeitsparendes Verfahren zum Speichern von Anwendungsdaten in einen Datenträger mit einem nichtflüchtigen Speicher und einem verschlüsselnden Speicher-Controller zum Ansteuern des nichtflüchtigen Speichers zu schaffen.

Die Aufgabe wird gelöst durch ein Verfahren nach dem unabhängigen Verfahrensanspruch. Vorteilhafte Ausgestaltungen der Erfindung sind in den abhängigen Ansprüchen angegeben. Ein entsprechender Datenträger wird ebenfalls angegeben.

Das erfindungsgemäße Verfahren gemäß dem unabhängigen Anspruch 1 ist zum Speichern von Anwendungsdaten in einen Datenträger mit einem nichtflüchtigen Speicher und einem verschlüsselnden Speicher-Controller zum Ansteuern des nichtflüchtigen Speichers vorgesehen. Der Speicher-Controller hat eine Verschlüsselungs-Funktionalität, durch welche an den Speicher-Controller bereitgestellte, im nichtflüchtigen Speicher abzuspeichernde Daten verschlüsselt werden, um nachfolgend verschlüsselt im nichtflüchtigen Speicher abgespeichert zu werden. Die Anwendungsdaten werden an eine Programmiermaschine bereitgestellt, um sie nachfolgend in den nichtflüchtigen Speicher zu speichern. Das erfindungsgemäße Verfahren zeichnet sich dadurch aus, dass die Anwendungsdaten durch die Programmiermaschine verschlüsselt werden, die durch die Programmiermaschine verschlüsselten Anwendungsdaten zum Abspeichern im nichtflüchtigen Speicher an den Speicher-Controller bereitgestellt werden, und die an den Speicher-Controller bereitgestellten verschlüsselten Anwendungsdaten unter Umgehung der Verschlüsselungs-Funktionalität des Speicher-Controllers in den nichtflüchtigen Speicher abgespeichert werden.

Dadurch, dass die Anwendungsdaten vorab außerhalb des Datenträgers verschlüsselt werden und unter Umgehung der Verschlüsselungs-Funktionalität in den nichtflüchtigen Speicher abgespeichert werden, kann ein zeitraubendes physikalisches Löschen des nichtflüchtigen Speichers unmittelbar vor dem Speichern der Anwendungsdaten entfallen.

Daher ist gemäß Anspruch 1 ein zeitsparendes Verfahren zum Speichern von Anwendungsdaten in einen Datenträger mit einem nichtflüchtigen Speicher und einem verschlüsselnden Speicher-Controller zum Ansteuern des nichtflüchtigen Speichers geschaffen.

Wahlweise wird, bevor die Anwendungsdaten abgespeichert werden, der nichtflüchtige Speicher unter Umgehung der Verschlüsselungs-Funktionalität des Speicher-Controllers physikalisch gelöscht. Da das Löschen unter Umgehung der Verschlüsselungs-Funktionalität durchgeführt wird, braucht es nicht unmittelbar vor dem Abspeichern der Anwendungsdaten zu erfolgen, sondern kann zu einem beliebigen früheren Zeitpunkt durchgeführt werden, beispielsweise während der Chipherstellung beim Chiphersteller, oder in einer Testphase beim Datenträgerhersteller. Herkömmlicherweise muss dagegen das Löschen unmittelbar vor dem Abspeichern der Anwendungsdaten durchgeführt werden, da sonst auf Grund der Verschlüsselungs-Funktionalität unbekannt ist, ob der Zustand des nichtflüchtigen Speichers unmittelbar vor dem Abspeichern der Anwendungsdaten physikalisch gelöscht oder nicht gelöscht ist. Vorzugsweise werden zwischen dem Löschen unter Umgehung der Verschlüsselungs-Funktionalität und dem Abspeichern der Anwendungsdaten unter Umgehung der Verschlüsselungs-Funktionalität keine Programmiervorgänge unter Verwendung der Verschlüsselungs-Funktionalität durchgeführt, damit kein unberechenbarer Zustand (unbekannt, ob gelöscht oder nicht gelöscht) des nichtflüchtigen Speichers erzeugt wird.

Wahlweise wird die Verschlüsselungs-Funktionalität vor dem Bereitstellen der Anwendungsdaten an den Speicher-Controller deaktiviert und nach dem Speichern der Anwendungsdaten in den nichtflüchtigen Speicher wieder aktiviert. Dadurch, dass die Verschlüsselungs-Funktionalität vorab deaktiviert wird, wird das erfindungsgemäße zeitsparende Programmieren der Anwendungsdaten, ohne die Notwendigkeit, den nichtflüchtigen Speicher unmittelbar vor dem Programmieren zu löschen, ermöglicht. Indem nach dem Programmieren die Verschlüsselungs-Funktionalität wieder aktiviert wird, bleibt die Sicherheit des Datenträgers gewahrt.

Wahlweise wird der nichtflüchtige Speicher physikalisch gelöscht, nachdem der Speicher-Controller deaktiviert worden ist und bevor die Anwendungsdaten abgespeichert werden. Wahlweise bleibt die Verschlüsselungs-Funktionalität von einem Zeitpunkt vor dem Löschen des nichtflüchtigen Speichers bis zu einem Zeitpunkt nach dem Abspeichern der Anwendungsdaten deaktiviert.

Wahlweise werden die Anwendungsdaten mit einem geheimen Schlüssel verschlüsselt. Der Schlüssel kann wahlweise ein für den Datenträger spezifischer Schlüssel sein. Wahlweise ist der geheime Schlüssel im Datenträger abgespeichert und wird vor dem Verschlüsseln der Anwendungsdaten an die Programmiermaschine bereitgestellt. Wahlweise wird der geheime Schlüssel durch die Programmiermaschine in den Datenträger gespeichert.

In diesem letzteren Fall legt beispielsweise die Programmiermaschine den Schlüssel fest.

Gemäß einer ersten Alternative der Erfindung sind als Anwendungsdaten Initialisierungsdaten zum Initialisieren des Datenträgers vorgesehen und ist als Programmiermaschine eine Initialisierungsmaschine vorgesehen. Gemäß einer zweiten Alternative der Erfindung sind als Anwendungsdaten Personalisierungsdaten zum Personalisieren des Datenträgers vorgesehen und ist als Programmiermaschine eine Personalisierungsmaschine vorgesehen.

Sowohl die Initialisierung als auch die Personalisierung des Datenträgers werden in einer gesicherten Umgebung beim Hersteller oder Herausgeber des Datenträgers durchgeführt. Daher ist es vom Gesichtspunkt der Sicherheit des Datenträgers her gerade bei der Initialisierung und Personalisierung des Datenträgers vertretbar, die Verschlüsselungs-Funktionalität zu umgehen, z.B. indem die Verschlüsselungs-Funktionalität vorübergehend deaktiviert wird. Andererseits ist Programmierzeit auf Initialisierungsmaschinen und Personalisierungsmaschinen besonders teuer und sollte daher möglichst kurz gehalten werden. Der erfindungsgemäße Wegfall des Erfordernisses, den nichtflüchtigen unmittelbar vor dem Abspeichern von Anwendungsdaten physikalisch zu löschen, und die daraus resultierende Zeitersparnis beim Abspeichern der Anwendungsdaten, sind daher bei der Initialisierung und Personalisierung von Datenträgern besonders vorteilhaft. Da ein Löschen des nichtflüchtigen Speichers nicht unmittelbar vor dem Abspeichern der Initialisierungs- bzw. Personalisierungsdaten zu erfolgen braucht, kann das Löschen mit dem erfindungsgemäßen Verfahren außerhalb der Initialisierungsmaschine oder Personalisierungsmaschine erfolgen, beispielsweise bei der Chipherstellung oder in einer Testphase vor der Initialisierung oder Personalisierung.

Der erfindungsgemäße Datenträger mit einem nichtflüchtigen Speicher zeichnet sich durch eine deaktivierbare Verschlüsselungs-Funktionalität seines Speicher-Controllers aus.

Im Folgenden wird die Erfindung an Hand von Ausführungsbeispielen und unter Bezugnahme auf die Zeichnung näher erläutert, in der zeigen:
- Fig.1: eine schematische Darstellung eines Datenträgers und einer Initialisierungsmaschine zum Initialisieren des Datenträgers, zur Veranschaulichung einer Initialisierung gemäß dem Stand der Technik;
- Fig. 2: eine schematische Darstellung eines Datenträgers und einer Initialisierungsmaschine zum Initialisieren des Datenträgers, zur Veranschaulichung einer Initialisierung gemäß einer Ausführungsform der Erfindung.

Fig.1 zeigt eine schematische Darstellung eines Datenträgers 100 und einer Initialisierungsmaschine 200 zum Initialisieren des Datenträgers 100, zur Veranschaulichung einer Initialisierung gemäß dem Stand der Technik. Der Datenträger 100 hat einen nichtflüchtigen Speicher NVM (z.B. EEPROM oder Flash-Speicher) und einen Speicher-Controller zum Ansteuern des nichtflüchtigen Speichers NVM. Der Speicher-Controller hat eine Verschlüsselungs-Funktionalität 110 und eine Einrichtung 130 zum physikalischen Löschen des NVM. Der Datenträger 100 hat weiter einen Schlüsselspeicher 120, in dem ein geheimer Schlüssel K des Datenträgers 100 abgespeichert ist. Bei der herkömmlichen Initialisierung bekommt die Initialisierungsmaschine 200 Initialisierungsdaten 300 zum Initialisieren des Datenträgers 100 und stellt sie als unverschlüsselte Initialisierungsdaten 310 an den Speicher-Controller bereit. Die Verschlüsselungs-Funktionalität 110 des Speicher-Controllers verschlüsselt die Initialisierungsdaten 310 mit dem geheimen Schlüssel K aus dem Schlüsselspeicher 120 und speichert sie als verschlüsselte Initialisierungsdaten 320 im nichtflüchtigen Speicher NVM ab. Unmittelbar bevor die verschlüsselten Initialisierungsdaten 320 im NVM abgespeichert werden, wird der nichtflüchtige Speicher NVM mit der Einrichtung 130 physikalisch gelöscht.

Fig. 2 zeigt eine schematische Darstellung eines Datenträgers 500 und einer Initialisierungsmaschine 600 zum Initialisieren des Datenträgers 500, zur Veranschaulichung einer Initialisierung gemäß einer Ausführungsform der Erfindung. Der Datenträger 500 hat einen nichtflüchtigen Speicher NVM (z.B. EEPROM oder Flash-Speicher) und einen Speicher-Controller zum Ansteuern des nichtflüchtigen Speichers NVM. Der Speicher-Controller hat eine Verschlüsselungs-Funktionalität 510, die - im Unterschied zur Verschlüsselungs-Funktionalität 110 aus dem Stand der Technik - deaktivierbar ist. Der Datenträger 500 hat weiter einen Schlüsselspeicher 520, in dem ein geheimer Schlüssel K des Datenträgers 500 abgespeichert ist. Bei der erfindungsgemäßen Initialisierung bekommt die Initialisierungsmaschine 600 ebenfalls Initialisierungsdaten 300 zum Initialisieren des Datenträgers 500 bereitgestellt. Im Unterschied zum Stand der Technik hat die Initialisierungsmaschine 600 eine Verschlüsselungseinrichtung 610, mit der sie die bereitgestellten Initialisierungsdaten 300 zu verschlüsselten Initialisierungsdaten 400 verschlüsselt und als verschlüsselte Initialisierungsdaten 410 an den Speicher-Controller bereitstellt. Die Verschlüsselungs-Funktionalität 510 des Speicher-Controllers ist zu diesem Zeitpunkt bereits deaktiviert. Daher stellt der Speicher-Controller die verschlüsselten Initialisierungsdaten 410 unter Umgehung seiner Verschlüsselungs-Funktionalität 510 direkt als verschlüsselte Initialisierungsdaten 420 zum Abspeichern an den nichtflüchtigen Speicher NVM bereit und speichert die verschlüsselten Initialisierungsdaten 420 im NVM ab. Das Löschen des nichtflüchtigen Speichers NVM mit einer Einrichtung 530 zum physikalischen Löschen des NVM erfolgte bereits vorab in einer Testphase, außerhalb der Initialisierungsmaschine 600, ebenfalls bei deaktivierter Verschlüsselungs-Funktionalität 510. Die Verschlüsselungs-Funktionalität 510 wird erst wieder aktiviert, nachdem die Initialisierungsdaten 420 in den nichtflüchtigen Speicher NVM gespeichert sind.

Der geheime Schlüssel K zum Verschlüsseln der Anwendungsdaten wird wahlweise durch den Datenträger 500 oder durch die Initialisierungsmaschine 600 vorgegeben. Im ersten Fall liefert der Datenträger 500 den im Schlüsselspeicher 520 des Datenträgers 500 bereits abgespeicherten geheimen Schlüssel K an die Initialisierungsmaschine 600 (gestrichelter Pfeil I), die mit dem Schlüssel K die Initialisierungsdaten verschlüsselt. Im zweiten Fall liefert die Initialisierungsmaschine 600 den geheimen Schlüssel K an den Datenträger 500, in welchem der Schlüssel K im Schlüsselspeicher 520 abgespeichert wird (gestrichelter Pfeil II), und verwendet den Schlüssel K selbst zum Verschlüsseln der Initialisierungsdaten 300 mit der Verschlüsselungseinrichtung 610.

## Patentansprüche

1. Verfahren zum Speichern von Anwendungsdaten in einen Datenträger (500) mit einem nichtflüchtigen Speicher und einem verschlüsselnden Speicher-Controller zum Ansteuern des nichtflüchtigen Speichers, welcher Speicher-Controller eine Verschlüsselungs-Funktionalität (510) hat, durch welche an den Speicher-Controller bereitgestellte, im nichtflüchtigen Speicher abzuspeichernde Daten (410) verschlüsselt werden, um nachfolgend verschlüsselt im nichtflüchtigen Speicher abgespeichert zu werden, wobei
- die Anwendungsdaten (300) an eine Programmiermaschine (600) bereitgestellt werden, um sie in den nichtflüchtigen Speicher zu speichern,
**dadurch gekennzeichnet, dass**
- die Anwendungsdaten (300) durch die Programmiermaschine (600) verschlüsselt werden,
- die durch die Programmiermaschine verschlüsselten (600) Anwendungsdaten (400) zum Abspeichern im nichtflüchtigen Speicher an den Speicher-Controller bereitgestellt werden, und
- die an den Speicher-Controller bereitgestellten verschlüsselten Anwendungsdaten (410) unter Umgehung der Verschlüsselungs-Funktionalität des Speicher-Controllers in den nichtflüchtigen Speicher abgespeichert werden (420).

2. Verfahren nach Anspruch 1, wobei, bevor die Anwendungsdaten (420) abgespeichert werden, der nichtflüchtige Speicher unter Umgehung der Verschlüsselungs-Funktionalität des Speicher-Controllers physikalisch gelöscht wird.

3. Verfahren nach Anspruch 1 oder 2, wobei die Verschlüsselungs-Funktionalität (510) vor dem Bereitstellen der Anwendungsdaten (400) an den Speicher-Controller deaktiviert wird und nach dem Speichern der Anwendungsdaten (420) in den nichtflüchtigen Speicher wieder aktiviert wird.

4. Verfahren nach einem der Ansprüche 1 bis 3, wobei die Anwendungsdaten (300) mit einem geheimen Schlüssel (K) verschlüsselt werden.

5. Verfahren nach Anspruch 4, wobei der geheime Schlüssel (K) im Datenträger (510) abgespeichert ist und vor dem Verschlüsseln der Anwendungsdaten (300) an die Programmiermaschine (600) bereitgestellt wird (I).

6. Verfahren nach Anspruch 4, wobei der geheime Schlüssel (K) durch die Programmiermaschine (600) in den Datenträger (500) gespeichert wird (II).

7. Verfahren nach einem der Ansprüche 1 bis 6, wobei als Anwendungsdaten Initialisierungsdaten zum Initialisieren des Datenträgers vorgesehen sind und wobei als Programmiermaschine (600) eine Initialisierungsmaschine vorgesehen ist.

8. Verfahren nach einem der Ansprüche 1 bis 6, wobei als Anwendungsdaten Personalisierungsdaten zum Personalisieren des Datenträgers vorgesehen sind und wobei als Programmiermaschine (600) eine Personalisierungsmaschine vorgesehen ist.

9. Datenträger (500) mit einem nichtflüchtigen Speicher und einem verschlüsselnden Speicher-Controller zum Ansteuern des nichtflüchtigen Speichers, welcher Speicher-Controller eine Verschlüsselungs-Funktionalität (510) hat, durch welche an den Speicher-Controller bereitgestellte, im nichtflüchtigen Speicher abzuspeichernde Daten (410) verschlüsselt werden, um nachfolgend verschlüsselt im nichtflüchtigen Speicher abgespeichert zu werden, **dadurch gekennzeichnet, dass**
die Verschlüsselungs-Funktionalität (510) deaktivierbar gestaltet ist.
